# EUROPEAN PATENT SPECIFICATION

(11) **EP 0 627 169 B1**
(45) Date of publication and mention of the grant of the patent: **27.08.1997**
(21) Application number: 94201326.9
(22) Date of filing: 17.05.1994
(51) Int. Cl.: A23C 1/12, A23C 11/04

(54) **A process for the preparation of evaporated milk**
Verfahren zur Herstellung von evaporierter Milch
Un procédé de préparation de lait évaporé

(30) Priority: 17.05.1993 NL 9300855
(43) Date of publication of application: 07.12.1994
(73) Proprietor: Friesland Brands B.V., 8937 AC Leeuwarden (NL)
(72) Inventor: Glas, Cornelis, NL-9255 KE Tietjerk (NL); Niewenhuyse, Hans, NL-8933 BR Leeuwarden (NL)
(74) Representative: Smulders, Theodorus A.H.J., Ir.

(56) References cited:
- EP-A- 0 435 822
- EP-A- 0 517 941
- DE-B- 1 092 287
- JOURNAL OF DAIRY RESEARCH, vol.46, 1979 pages 387 - 391 D. NEWSTEAD 'Studies on the induction of heat stability in evaporated milk by preheating: effects of milk concentration, homogenisation and whey proteins'
- JOURNAL OF THE SOCIETY OF DAIRY TECHNOLOGY, vol.35, no.4, 1982 pages 126 - 132 A. SWEETSUR ET AL. 'Manipulation of the heat stability of homogenized concentrated milk'

## Description

The invention relates to a process for the preparation of evaporated milk with a high heat and storage stability.

Evaporated milk, hereinafter also referred to as 'evap', is prepared by standardizing milk to a desired fat:non-fat solids ratio, keeping this milk at a high temperature for a specified time, the so-called preheat, and subsequently concentrating it to the desired solids content by means of evaporating water in vacuum. This product acquires a long storage life (1-2 years) by sterilizing it after packaging in can or bottle or by first sterilizing the product in throughflow and then aseptically packaging it. Because of the heating steps, evap has a brownish color.

Sterilization alone is not sufficient to achieve a long storage life of a fat-containing evap. In addition, it is necessary to reduce the emulsion particles to prevent separation of the fat fraction. This reduction of emulsion particles arises during homogenization. It is therefore conventional to homogenize the concentrated liquid product subsequently to the evaporation step. Because homogenization after the evaporation step gives a product with a low heat stability, i.e., a product that curdles during sterilization, stabilization salts, such as Na₂HPO₄, are added to render the product suitable for sterilization. It is necessary to determine the optimum amount of stabilization salts for each batch of evap to be produced because the reaction of evap to the (phosphate) addition varies from one batch to another due to natural variation. This is done by means of a so-called test sterilization. This test sterilization is a time-consuming step which slows down the progression of the complete process to a considerable extent.

There is accordingly a need in this branch of the art to prepare evap with a high heat stability and an excellent storage stability through a simpler and more economical process.

The literature - for an overview, see, for instance, the article by H. Singh, L.K. Creamer & D.F. Newstead, Bulletin of the IDF N° 238/1989, pp. 94-104 - in addition to mentioning the stabilization techniques already in use, such as preheating before evaporation at 120 °C, two-stage homogenization after evaporation and phosphate addition before sterilization, also mentions the use of additives which are not allowed by food law, such as formaldehyde, H₂O₂, or lye, and of expensive and complicated processes to remove serum proteins or salts.

As regards the order in which the process steps that precede the addition of stabilization salts and sterilization are to be carried out, it was found that the most conventional method, i.e., "preheating - concentration - homogenization" gave better results than alternatives such as "homogenization - cooling - preheating - concentration" or "preheating - cooling - homogenization - concentration". In this connection reference is made to Sweetsur & Muir, Journal of the Society of Dairy Technology 35 (1982) 126-132.

Newstead et al., Journal of Dairy Research 46 (1979) 387-391, concluded after a similar investigation that: "(1) homogenization of fat in milk before preheating considerably reduces heat stability of the resulting evaporated milk, (2) concentration of the milk before preheating and later homogenization has a destabilizing effect, while both concentration and homogenization before preheating cause the preheating to have a destabilizing rather than stabilizing effect on the EM" (EM = evaporated milk).

In summary, in the above studies it is concluded that the most conventional order of the process steps in the preparation of evap, viz. preheating - concentration - homogenization - phosphate addition - sterilization, is the most optimum order. This method necessitates the addition of stabilization salts.

Known from the prior art are a few methods whereby an evap can be prepared with a good storage stability without requiring the addition of stabilization salts. Examples of such methods are described in US-A-2 860 057, EP-A-0 433 474, EP-A-0 435 822, and EP-A-0 517 941. The methods described in these publications, however, are very complex and require much equipment, while the energy consumption per unit product is much higher than with the above-described most commonly used method.

The most characteristic step of the methods according to US-A-2 860 057, EP-A-0 433 474 and EP-A-0 435 822 is that before sterilization the concentrated milk is subjected to an additional heating and is subsequently homogenized again. This prodecure replaces, as it were, the addition of stabilization salts. In the industrial practice, however, these additional operations impede the progress of the production process.

The complete process described in EP-A-0 433 474 for evap sterilized in a container comprises the steps: warming - homogenization - preheating - concentration - homogenization - heating - homogenization - sterilization. Warming to the temperature of the first homogenization is effected by the use of a plate pasteurizer. It can be derived from the drawings of this patent application it can be derived that in addition to an evaporator and a sterilizer, six pasteurizers and three homogenizers are necessary for the process described.

As an alternative, both EP-A-0 433 474 and EP-A-0 435 822 mention a method in which the first homogenization is replaced with the admixture of a milk raw material that contains many phospholipids. However, this modification makes the process only marginally simpler.

EP-A-0 517 941 gives yet another alternative: homogenizing only a part of the milk before the preheating step. The process order according to the examples is as follows: warming - separation in two streams - homogenizing one of these streams - mixing - preheating - evaporation - homogenization - sterilization. Compared with the above-described conventional method, a marked additional homogenization capacity is required, in addition to equipment for the purpose of separation and mixing.

According to the invention it has now been found that, without any processing of the concentrated milk between evaporation and sterilization, a heat-stable and storage-stable product can be obtained if the non-concentrated milk is homogenized after regenerative heating in the effects of the evaporator to a temperature of 50-100°C, and is subsequently heated to the preheat temperature by means of a pasteurizer, a sustained heating is conducted and the milk is subsequently evaporated and then sterilized. In summary, the method according to the invention comprises the steps of: warming - homogenization - preheating - concentration - sterilization.

According to the method of the invention, thus an optimum product is obtained with a minimum number of process steps. Compared with the conventional method, the addition of stabilization salts and the associated test sterilization can be omitted. Compared with the methods described in US-A-2 860 057, EP-A-0 433 474, EP-A-0 435 822 and EP-A-0 517 941, less equipment will suffice, and the energy consumption is considerably less.

More particularly, the invention relates to a process for the preparation of evaporated milk having a high heat and storage stability, in which the following steps are carried out:
(a) preparing a milk liquid by standardization to a desired fat:non-fat solids ratio;
(b) regenerative heating of this standardized milk liquid in the effects of an evaporator to a temperature of 50-100°C;
(c) homogenizing this milk liquid;
(d) further heating of the milk liquid to the preheat temperature;
(e) preheating;
(f) concentration; and
(g) sterilization.

Homogenization preferably occurs during the warming to the preheating temperature in the temperature range of 70-90°C.

Since by the use of the method according to the invention all of the processing operations on the evaporated milk between evaporation and sterilization are redundant and homogenization and preheating are integrated into the evaporation process, evaporated milk can thus be prepared in a single process operation. All this considerably simplifies the process conduct in the industrial practice, which entails a considerable saving in process time and manpower.

When this method is used, it is no longer necessary to use stabilization salts and an evaporated milk of a white color can be prepared.

In the method according to the invention, for instance the following can be used as milk raw materials in the preparation of the evap: whole milk, partially creamed milk, skim milk, or whey liquids, which liquids have optionally been reconstituted from powdered products. In this milk liquid caseinates, whey proteins, whey and milk derivatives such as lactose, permeate, milk minerals, or desugared whey can be included, which additives have optionally been obtained from a dried product.

In a preferred embodiment of the method according to the invention, fats of vegetable or animal origin are emulsified in the milk liquid. In this connection it is also possible to add emulsifiers or emulsifier-containing substances to the milk liquid, these emulsifying substances having optionally been obtained from a dried product. Suitable examples of such emulsifier-containing liquids are butter serum and sweet buttermilk.

For certain evaps, pseudofats (fat replacers) can be included in the milk liquid.

In addition, sometimes micro-ingredients such as vitamins, minerals, amino acids, flavoring and coloring substances, nucleotides, are included in the milk liquid.

The standardization with fats, emulsifiers or emulsifier-containing liquids, which contain many phospholipids with suitable properties for the storage and heat stability, can be realized in the conventional manner before the process steps of "warming - homogenization - preheating", but may also be (partly) realized through dosing on one of the stages of the evaporator.

The dairy product prepared in accordance with the invention is normally either sterilized in the package after being packaged, for instance in cans or bottles, or sterilized in throughflow and subsequently packaged aseptically after cooling.

The invention will now be further explained in and by two examples.

### COMPARATIVE EXAMPLE 1

In accordance with the above-described conventional method 525 kg whole milk (4.23% fat, 8.72% non-fat solids (nfs)) was mixed with 91 kg low-fat milk (0.03% fat, 8.98% nfs) to form a mixed milk with 3.60% fat and 8.8% nfs. This milk was regeneratively heated to 70°C and subsequently to 120°C with a pasteurizer. After sustained heating for 3 minutes at this temperature the milk was evaporated to a solids content of 32.6%, and subsequently homogenized at 50°C at a pressure of 200+30 bar. The concentrated milk was standardized to a solids content of 31% with different mixtures of water and a Na₂HPO₄ solution, packaged in cans and sterilized. An addition of 0.12% Na₂HP0₄ (calculated by conversion) was found to yield sufficiently stable evap. Without added phosphate the evap curdled.

### EXAMPLE 1

By the method of the invention, 616 kg mixed milk was prepared from the same whole and low-fat milk as described in Comparative Example I. This milk was regeneratively heated to 70°C and homogenized at this temperature at a pressure of 270+30 bar - this homogenization pressure gave the same fat distribution in the evap as obtained at the above-mentioned pressure in the preparation according to the conventional method: only in the case where the fat distributions are the same can two different processes be properly compared with regard to heat and storage stability. After homogenization the milk was further heated to 120°C and after being maintained at this temperature for 3 minutes was subsequently evaporated to 32.9% solids. This concentrate too was standardized to a solids content of 31% with mixtures of water and a Na₂HPO₄ solution, packaged in cans and sterilized. Now, without added phosphate, a product of excellent heat and storage stability was obtained, which is comparable with a known product to which phosphate had been added.

### COMPARATIVE EXAMPLE 2

In accordance with a traditional method, 454 kg whole milk (4.69% fat, 8.88% nfs), 175 kg low-fat milk (0.03% fat, 9.17% nfs) and 51 kg sweet butter serum were mixed to form a milk having 3.20% fat and 8.9% nfs. This milk was regeneratively heated to 70°C and subsequently heated to 120°C with a pasteurizer. After a sustained heating for 3 minutes at this temperature, the milk was evaporated to a solids content of about 31%. After "in line" standardization with water to a solids content of 30.2%, the evap was sterilized in throughflow at 130°C for 1 minute, followed by aseptic homogenization at 50°C at a pressure of 200 bar, and packaged aseptically. Coagulation of the evap during sterilization did not arise but the product did exhibit clear creaming after 1 month at 30°C.

### EXAMPLE 2

In accordance with the invention, 680 kg mixed milk according to Comparative Example 2 was regeneratively heated to 80°C, homogenized at a pressure of 270+30 bar, further heated to 120°C, and, after being maintained at this temperature for 3 minutes, subsequently concentrated. After "in-line" standardization with water to a solids content of 30.2%, the evap was sterilized in throughflow at 130°C for 1 minute, and aseptically packaged. The so prepared evap did not coagulate during sterilization and had such a high viscosity (about 35 mPa·s) that creaming during storage was minimal.

## Claims

1. A process for the preparation of evaporated milk having a high heat and storage stability, wherein the following steps are carried out:
(a) preparing a milk liquid by standardization to a desired fat:non-fat solids ratio;
(b) regenerative heating of this standardized milk liquid in the effects of an evaporator to a temperature of 50-100°C;
(c) homogenizing this milk liquid;
(d) further heating the milk liquid to the preheat temperature;
(e) preheating;
(f) concentration; and
(g) sterilization.

2. A process according to claim 1, wherein the homogenization occurs during the heating to the preheat temperature in the temperature range of 70-90°C.

3. A process according to claim 1 or 2, wherein the milk liquid used comprises whole milk, partially creamed milk, skim milk, or whey liquids, said liquids having optionally been reconstituted from powdered products.

4. A process according to any one of the preceding claims, wherein caseinates, whey proteins, whey and milk derivatives as lactose, permeate, milk minerals, or desugared whey are included in the milk liquid, these additives having optionally been obtained from a dried product.

5. A process according to any one of the preceding claims, wherein fats of vegetable or animal origin are emulsified in the milk liquid.

6. A process according to any one of the preceding claims, wherein emulsifiers or emulsifier-containing liquids are added to the milk liquid, said emulsifying substances having optionally been obtained from a dried product.

7. A process according to claim 6, wherein the emulsifier-containing liquid is butter serum of sweet buttermilk.

8. A process according to any one of the preceding claims, wherein pseudofats (fat replacements) are included in the milk liquid.

9. A process according to any one of the preceding claims, wherein micro-ingredients such as vitamins, minerals, amino acids, flavoring and coloring substances, nucleotides are included in the milk liquid.

10. A process according to any one of the preceding claims, wherein the dairy product, after being packaged in, for instance, can or bottle, is sterilized in the package, or is sterilized in throughflow and, after cooling, subsequently packaged aseptically.

## Patentansprüche

1. Verfahren zur Herstellung von Kondensmilch mit einer hohen Wärme- und Lagerstabilität, worin die folgenden Schritte ausgeführt werden:
(a) Herstellung einer Milchflüssigkeit durch Standardisierung auf ein gewünschtes Verhältnis von Fett:Nicht-Fett-Feststoffen;
(b) regeneratives Erhitzen dieser standardisierten Milchflüssigkeit unter Ausnutzung der Wirkung eines Verdampfers auf eine Temperatur von 50 bis 100°C;
(c) Homogenisierung dieser Milchflüssigkeit;
(d) weiteres Erhitzen der Milchflüssigkeit auf die Vorwärmtemperatur;
(e) Vorwärmen;
(f) Konzentrieren; und
(g) Sterilisation.

2. Verfahren gemäss Anspruch 1, worin die Homogenisierung während des Erhitzens auf die Vorwärmtemperatur im Temperaturbereich von 70 bis 90°C stattfindet.

3. Verfahren gemäss Anspruch 1 oder 2, worin die verwendete Milchflüssigkeit Vollmilch, teilweise entrahmte Milch, Magermilch oder Molkeflüssigkeiten umfasst, wobei die Flüssigkeiten optional aus Pulverprodukten zubereitet wurden.

4. Verfahren gemäss einem der vorhergehenden Ansprüche, worin Kaseinate, Molkeproteine, Molke- und Milchderivate, wie Lactose, Permeat, Milchmineralstoffe oder entzuckerte Molke, in der Milchflüssigkeit eingeschlossen sind, wobei diese Zusatzstoffe optional aus getrockneten Produkten erhalten wurden.

5. Verfahren gemäss einem der vorhergehenden Ansprüche, worin Fette pflanzlichen oder tierischen Ursprungs in der Milchflüssigkeit emulgiert sind.

6. Verfahren gemäss einem der vorhergehenden Ansprüche, worin Emulgatoren oder emulgatorhaltige Flüssigkeiten zur Milchflüssigkeit hinzugefügt werden, wobei die emulgierenden Stoffe optional aus einem getrockneten Produkt erhalten wurden.

7. Verfahren gemäss Anspruch 6, worin die emulgatorhaltige Flüssigkeit Butterserum oder süsse Buttermilch ist.

8. Verfahren gemäss einem der vorhergehenden Ansprüche, worin Pseudofette (Fettersatzstoffe) in der Milchflüssigkeit eingeschlossen sind.

9. Verfahren gemäss einem der vorhergehenden Ansprüche, worin Mikrobestandteile, wie Vitamine, Mineralstoffe, Aminosäuren, Aroma- und Farbstoffe und Nukleotide, in der Milchflüssigkeit eingeschlossen sind.

10. Verfahren gemäss einem der vorhergehenden Ansprüche, worin das Molkereiprodukt nach dem Verpacken in beispielsweise einer Dose oder Flasche in der Verpackung sterilisiert wird, oder im Durchfluss stabilisiert wird und nach dem Abkühlen anschliessend aseptisch verpackt wird.

## Revendications

1. Procédé de préparation de lait évaporé ayant une résistance élevée à la chaleur et au stockage, dans lequel sont mises en oeuvre les étapes suivantes :
(a) préparation d'un liquide lacté par normalisation à un rapport matières solides grasses : matières solides non grasses désiré ;
(b) chauffage régénérateur de ce liquide lacté normalisé sous l'effet d'un évaporateur à une température de 50 à 100°C ;
(c) homogénéisation de ce liquide lacté ;
(d) chauffage additionnel du liquide lacté à la température de préchauffage ;
(e) préchauffage ;
(f) concentration ; et
(g) stérilisation.

2. Procédé selon la revendication 1, dans lequel l'homogénéisation est effectuée durant le chauffage à la température de préchauffage dans l'intervalle de température de 70 à 90°C.

3. Procédé selon la revendication 1 ou 2, dans lequel le liquide lacté comprend du lait entier, du lait partiellement écrémé, du lait écrémé ou des liquides de petit*-*lait, lesdits liquides ayant été facultativement reconstitués à partir de produits en poudre.

4. Procédé selon l'une quelconque des revendications précédentes, dans lequel des caséinates, des protéines de petit-lait, des dérivés de petit-lait et de lait tels que lactose, perméat, minéraux de lait ou petit-lait désucré sont inclus dans le liquide lacté, ces additifs ayant été facultativement été obtenus à partir d'un produit séché.

5. Procédé selon l'une quelconque des revendications précédentes, dans lequel des graisses d'origine végétale ou animale sont émulsifiées dans le liquide lacté.

6. Procédé selon l'une quelconque des revendications précédentes, dans lequel des émulsifiants ou des liquides contenant des émulsifiants sont ajoutés au liquide lacté, lesdites substances émulsifiantes ayant facultativement été obtenues à partir d'un produit séché.

7. Procédé selon la revendication 6, dans lequel le liquide contenant des émulsifiants est du sérum butyrique de babeurre doux.

8. Procédé selon l'une quelconque des revendications précédentes, dans lequel des pseudomatières grasses (substituts des matières grasses) sont incluses dans le liquide lacté.

9. Procédé selon l'une quelconque des revendications précédentes, dans lequel des micro-ingrédients tels que vitamines, minéraux, acides aminés, arômes et colorants, nucléotides sont inclus dans le liquide lacté.

10. Procédé selon l'une quelconque des revendications précédentes, dans lequel le produit laitier, après avoir été conditionné dans une boîte métallique ou une bouteille par exemple, est stérilisé dans son contenant ou est stérilisé au fur et à mesure de sa production et, après refroidissement, est ensuite conditionné aseptiquement.
